# EUROPEAN PATENT SPECIFICATION

(11) **EP 1 381 641 B1**
(45) Date of publication and mention of the grant of the patent: **13.08.2014**
(21) Application number: 02718375.5
(22) Date of filing: 23.04.2002
(51) Int. Cl.: C08J 5/24, B29B 15/10, B44C 5/04, B29B 15/12, B29C 70/54, B44C 3/04

(54) **IMPROVEMENTS IN OR RELATING TO MOULDING MATERIALS**
VERBESSERUNGEN BEI ODER IN BEZUG AUF FORMKÖRPERN
AMELIORATIONS APPORTEES A DES MATERIAUX DE MOULAGE

(30) Priority: 27.04.2001 GB 0110316
(43) Date of publication of application: 21.01.2004
(73) Proprietor: Umeco Structural Materials (Derby) Limited, Heanor Derbyshire DE75 7SP (GB)
(72) Inventor: CORDEN, Thomas, Huntington York YO3 9DX (GB); CHOUDRY, Arshad, Radford Nottingham NG7 5QD (GB); STEELE, Mark Raymond, Belper Derbyshire DE56 0ZY (GB)
(74) Representative: Womsley, Nicholas
(86) International application number: PCT/GB2002/001863
(87) International publication number: WO 2002/088231

(56) References cited:
- EP-A- 0 549 213
- EP-A2- 0 312 993
- WO-A-98/38031
- WO-A-99/47620
- WO-A1-99/21697
- WO-A2-01/00405
- DE-A- 19 757 090
- FR-A- 2 409 774
- US-A- 5 304 269
- VAN DER PLOEG T: "Laser marking aids product identification" REINFORCED PLASTICS, ELSEVIER ADVANCED TECHNOLOGY, NEW YORK, NY, US, vol. 43, no. 5, May 1999 (1999-05), pages 50-51, XP004165139 ISSN: 0034-3617
- THORHINNSON B ET AL: 'PRODUCTION OF VOID FREE COMPOSITE PARIS WITHOUT DEBULKING' INTERNATIONAL SAMPE SYMPOSIUM AND EXHIBITION vol. 31, 10 April 1986, pages 480 - 490, XP009066663
- THORFINNSON B ET AL: 'DEGREE OF IMPREGNATION OF PREPREGS - EFFECTS OF POROSITY' INTERNATIONAL SAMPE SYMPOSIUM AND EXHIBITION 06 April 1987, pages 1500 - 1509, XP009066425

## Description

The present invention concerns improvement in or relating to moulding materials and methods for producing moulding materials.

Moulding materials particularly for moulding fibre reinforced moulded articles are known in the form of a layer of fibrous material which is fully impregnated with a predetermined amount of resinous material. These are conventionally known as prepregs. Such prepregs are laminated usually within a mould and then cured to produce a composite, fibre reinforced moulded article.

A particular disadvantage of such prepregs is that during moulding air can become trapped between the layers of prepreg which will cause voidage on a macro and microscopic level. Such voidage will cause weaknesses and other undesirable characteristics in the moulded article.

Various methods have been employed to address this problem, and one such method is to use moulding materials comprising a layer of fibrous material on one side of which is provided a layer of resinous material. This resinous layer may sometimes be partially impregnated into the fibrous layer.

The unimpregnated surface of the fibrous layer provides air paths for trapped air to move along as it is drawn out during the moulding process which conventionally employs the use of a vacuum to draw the trapped air from the material.

Such sided prepregs have proved useful, particularly when the resinous material used cures at relatively high temperatures, i.e. above approximately 120°C. However problems can occur if curing is required at relatively low temperatures, e.g. room temperature to approximately 120°C because for such low temperature curing the resins used have relatively low viscosity which results in the resin gradually migrating into and impregnating the fibrous layer and relatively rapid loss of the sided nature of the prepreg.

A further disadvantage of sided prepregs arises when, as is usual, it is required that the material will stick or tack to a tool face and subsequent layers of prepreg. The dry, fibrous layers will have no tacky characteristic, i.e. zero tack, and so retaining such prepregs in the desired position within a mould often requires the use of other agents such as tackifiers, binders and spray adhesives. Such agents however can "wet-out" the dry fibrous layer, thereby eliminating the necessary air paths to achieve low voidage levels. Such agents can also have other disadvantages, for example they can reduce mechanical properties such as inter-laminar shear and are often solvent based resulting in environmental and health and safety problems. Moulding with sided prepregs can be laborious and can often result in a loss of definition in a moulded article, especially at sharp corners and details.

XP009066663 deals with the problem of voids in thick laminates of prepregs using partially impregnated prepregs or sided prepregs. A layer of fibrous material has a layer of resinous material applied over one surface thereof and the resinous material allowed to partially impregnate through the thickness of the fibrous material

XP009066425 is a continuation of the theory discussed in XP009066668. It again refers to partially impregnated prepregs as discussed above.

EPA312993 relates to a method of resin impregnation in the production of prepregs and the like. It is concerned with solving the problem of "squeeze out" of resin which occurs when certain parameters such as production rate are increased beyond a certain level in automated prepreg production.

The problem is addressed by introducing a layer of resin to a layer of sheet like material and consolidating them using a press roll having a rugged pattern on its surface.

The impregnation of the resin into the fibre layer is localised in the sense that only certain areas of the fibre layer have been forced into the resin film for the resin to impregnate it. Since the resin is always provided in the form of a sheet or layer, there are no areas devoid of resin on the fibrous layer and that provide airways for the evacuation of air.

WO-A-99/21697 relates to a preform suitable for use in resin transfer moulding where a very light polymeric curable resin film grid is provided simply to hold together fibres within the fibrous layer, which would otherwise tend to move and disassociate from each other. The resin grid is very lightweight and is part of the surface of this fibrous layer.

WO-A-0100405 relates to a method of manufacturing void-free laminate using partially impregnated prepregs. The resin is provided on the fabric layer in the form of a continuous film. The degree of impregnation of the resin film through the thickness of the fabric layer determines the degree of impregnation (i.e. partial). It is described as being controlled so that there are sufficient dry fibres in the middle of the prepreg and the resin is a "uniform coating" which results in a "homogenous film over the substrate".

According to the present invention there is provided moulding material comprising a fibrous layer carrying a resinous material to have a pattern comprising bands, stripes or squares of relatively high resin content extending in spaced configuration across a side of the fibrous layer wherein the resin is wholly impregnated through the thickness of the fibrous layer such that corresponding bands, stripes or squares are provided on the underside surface of the fibrous layer, spaced by at least one other area of relatively low resin content that is devoid of resin defined on the side of the fibrous layer wherein one or more airways are provided by the area(s) of relatively low resin content on the side of the fibrous layer for the removal of air during curing of the material.

Preferably the moulding material is arranged such that during curing or partial curing resinous material moves to provide a substantially even distribution of resinous material between the areas.

Preferably the material is arranged so that during curing resinous material from the said relatively high resin content area(s) moves over the relatively low resin content area(s).

Preferably the resinous material is flowable during curing into the area(s) of relatively low resin content to impregnate the fibrous layer.

Preferably the or one or more of the area(s) of relatively low resin content are substantially devoid of resin and desirably comprise substantially dry fibrous material.

The amount of resin may differ on the respective sides of the layer. Preferably the resinous surface area is substantially the same on the respective sides of the fibrous layer.

According to a still further alternative one or more areas of relatively high resin content and of relatively low resin content may be provided on each side of the fibrous layer, at least one of the area(s) on one of said sides being discrete from the or at least one of the areas on said other side.

Preferably the amount of resinous material in each relatively high resin content area is substantially the same. Alternatively the amount of resinous material may differ between some or all of the said relatively high resin content areas.

The pattern of areas of relatively high resin content may be generally directional and may extend in a predetermined direction relative to a direction characteristic of the fibrous layer. For example bands of relatively high resin content may extend generally perpendicularly to the weft of a fibrous layer comprising woven material.

Alternatively or in addition the pattern may comprise various areas extending along both the warp and weft of a layer of woven fibrous material.

Alternatively or in addition, the pattern may define one or more symbols such as letters, words, logos or the like.

Regions may be provided on the moulding material and a pattern of areas of relatively high resin content provided in at least one and desirably all of said regions. The pattern may be the same in some or all of the regions or alternatively a different pattern may be located in some or each region in which a pattern is provided. The regions may be defined at least in part, by fold lines or locations at which the material is or is intended to be folded or bent particularly in a mould during use.

Preferably the resinous material is sufficiently viscous to substantially remain in the desired area(s) for a predetermined time, desirably to enable the moulding material to be generally stable for use for at least the outlife of the resinous material, desirably for approximately 10 days or more, whilst preferably enabling the moulding material to be curable at relatively low temperatures, such as room temperature up to 120°C.

The resinous material may comprise a thermosetting material including but not limited to any one or more of epoxy phenol novolaks, epoxy novolaks, epoxy cresol novolaks, bis phenol A epoxy resins, bis phenol F epoxy resins, multi functional resins, multi functional epoxy resin, phenolics, cyanate esters, BMI's, polyesters, thermoplastic materials. The resinous material can contain up to 70% by weight, but ideally less than 40% by weight additives not covered by the above. These additives may fall into a number of categories, such as thermoplastics, frame-retardants, fillers and curing agents, including combinations and blends of the above and others well known to those skilled in the art.

Alternatively or in addition the resinous material may comprise a thermoplastic material.

The fibrous layer may comprise a single layer of fibrous material or alternatively may comprise a plurality of layers of material. The fibrous material may be generally continuous within the layer, such as woven material. Alternatively or in addition the fibrous material may be generally discontinuous within the layer, such as chopped mat material. The layers may comprise the same or alternatively different types of fibrous material. The fibrous material may comprise, but is not limited to one or more of glass fibre, carbon fibre, aramid, PE, PBO, boron natural fibres, stitched fabric, UD tape, non-woven material such as glass and/or polyester thermoplastic fibres or blends thereof. The fibrous layer may be partially or wholly pre-impregnated with further resinous material, which further resinous material may be the same or different to said resinous material.

The moulding material may comprise a further layer of material such as fibrous material and/or resinous material conjoined to one or more of the area(s) of relatively high resin content to one side of the fibrous layer. A said further layer may be provided on both sides of the moulding material.

Further according to the present invention there is provided a moulding laminate comprising a plurality of layers of moulding material substantially as defined above.

Preferably the area(s) of relatively low resin content in adjacent layers are in alignment one above the other.

Alternatively or also some or all the area(s) of relatively low resin content in adjacent layers are not in alignment one above the other, although they preferably, at least partially overlap between adjacent layers.

According to a still further aspect of the present invention there is provided a method of producing a moulding material comprising providing a resinous material to have a pattern comprising bands, stripes or squares of relatively high resin content extending in spaced configuration across a side of a fibrous layer, wherein the resin is wholly impregnated through the thickness of the fibrous layer such that corresponding bands, stripes or squares are provided on the underside surface of the fibrous layer, and spaced by at least one area of relatively low resin content that is devoid of resin on the side of the layer of fibrous material wherein one or more airways are provided on the side of the fibrous layer by the area(s) of relatively low resin content for the removal of air during curing of the material.

The method is preferably used to produce moulding material substantially as defined above.

The area(s) of relatively high resin content may be printed, sprayed and/or painted on the fibrous material.

According to a yet further aspect of the present invention there is provided a method of moulding a composite material comprising heating moulding material as defined in any of paragraphs eight to twenty seven, to cause resinous material to move to be substantially evenly distributed between the areas.

Preferably the material is located in or against a mould or tool during moulding. The material is preferably located with area(s) of relatively high resin content located against the mould to facilitate location thereof during curing.

The material may be moulded in a substantial vacuum or otherwise low pressure conditions to facilitate removal of air via the area(s) of relatively low resin content.

Preferred embodiments of the present invention will now be described by way of example only with reference to the accompanying drawings in which:-
Fig. 1 is a diagrammatic plan view of a moulding material according to a first embodiment of the present invention;
Fig. 2 is a perspective view of the moulding material of Fig. 1;
Fig. 3 is a cross sectional view of the moulding material of Fig. 1, along the line III-III;
Fig. 4 is a plan view of a moulding material according to a second embodiment of the present invention;
Fig. 5 is a plan view of a moulding material according to a third embodiment of the present invention;
Fig. 6 is a cross sectional view of a moulding material according to a fourth embodiment of the present invention;
Fig. 7 is a cross sectional view of a moulding material according to a fifth embodiment of the present invention;
Fig. 8 is a cross sectional view of a comparative moulding material;
Fig. 9 is a cross sectional view of a comparative moulding material;
Fig. 10 is a cross sectional view of a comparative moulding material;
Fig. 11 is a cross sectional view of a comparative moulding material;
Fig. 12 is a cross sectional view of a comparative moulding material;
Fig. 13 is a cross sectional view of a comparative moulding material;
Fig. 14 is a cross sectional view of a laminate moulding material according to the present invention;
Fig. 15 is a cross section of a further laminate moulding material according to the present invention;
Fig. 16 is a cross section of a comparative laminate moulding material;
Fig. 17 is a cross section of another comparative laminate moulding material; and
Fig. 18 is a plan view of a moulding material according to a sixth embodiment of the present invention.

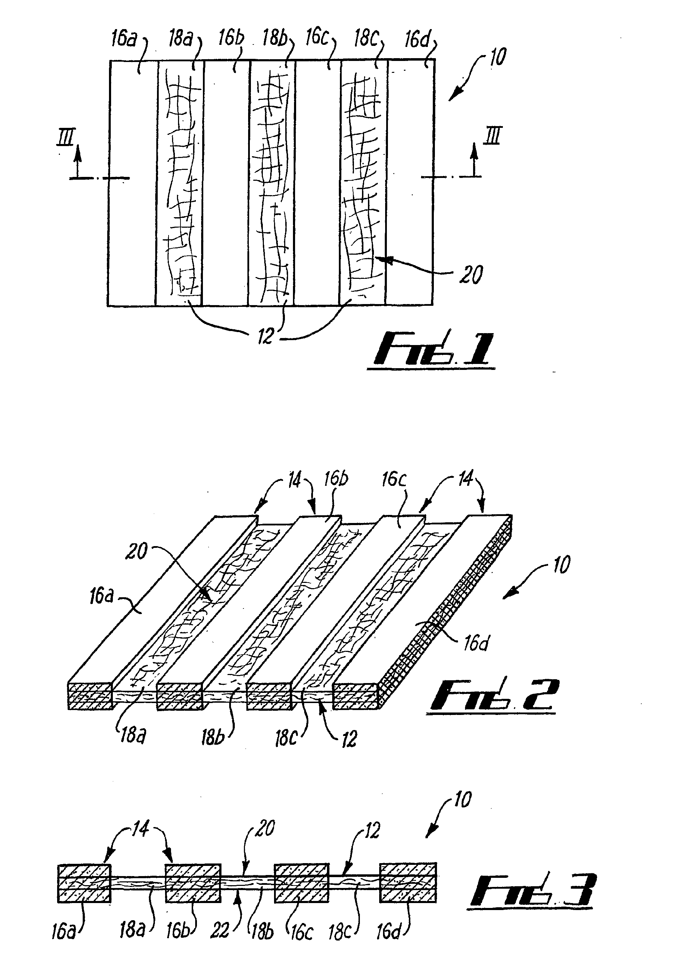

Referring to Figs. 1 to 3, there is provided a moulding material 10 comprising a fibrous layer 12 carrying resinous material 14 to have at least one and in this embodiment four areas 16a, 16b, 16c and 16d of relatively high resin content and at least one other, and in this embodiment three areas 18a, 18b and 18c of relatively low resin content defined on a surface 20 of the fibrous layer 12.

In more detail, the fibrous layer 12 comprises a single layer of any suitable fibrous material that could be used as reinforcement of an article produced using the moulding material 10. The material may comprise, for example, glass fibre, carbon fibre, aramid, PE, PBO, boron or natural fibres, stitched fabric, UD tape, non-woven materials such as glass or polyester; or any combination of the above.

The resinous material preferably comprises a low temperature curing, relatively low viscosity material, e.g. room temperature to 120°C. The resin material may comprise one or more of, for example epoxy phenol novolaks, epoxy novolaks, epoxy cresol novolaks, bis phenol A based epoxy resins, bis phenol F epoxy resins, multi functional resins such as multi functional epoxy resin, phenolics, cyanate esters, BMI's, polyesters, other thermosetting materials. However, it is within the scope of the present invention to use any suitable resinous material, including materials of relatively high cure temperatures (for example 250°C) and thermoplastic materials.

The high resin content areas 16a, 16b, 16c and 16d are in the form of strips or bands extending in spaced configuration across the surface 20 of the fibrous material layer 12. The resin is wholly impregnated through the thickness of the fibrous layer 12 such that corresponding bands or strips are provided on the underside surface 22 of the fibrous layer 12.

Referring particularly to Figs. 2 and 3, the resin bands 16a, 16b, 16c and 16d protrude from both sides 20, 22 of the fibrous layer 12 to substantially the same depth, although it will be appreciated in a further alternative that the amount of resin on the respective surfaces 20, 22 may differ.

The areas of low resin content 18a, 18b and 18c are essentially devoid of any resin and comprise essentially dry fibrous materials.

It is found that even relatively low viscosity resin has little tendency to migrate in a lateral direction to further impregnate the layer of woven material. This gives the moulding material 10 good stability, particularly relative to known sided prepregs. Moreover, the provision of resin on both surfaces 20, 22 of the fibrous layer 12 gives the moulding material 10 tack on both surfaces which enables it to self-adhere to the inside of a mould when forming a moulded article, thereby overcoming other difficulties of known sided prepregs.

The low resin content areas 18a, 18b and 18c provide pathways for the movement and removal of air as material 10 is layered in a mould and during the moulding process.

The amount of resin provided in the relatively high resin content areas 16a, 16b, 16c and 16d is sufficient to ensure that during the curing cycle the resin flows over and impregnates the low resin content areas 18a, 18b and 18c to give the moulding material a generally uniform distribution of resin throughout and an overall appropriate amount of resin for the application of the material 10. The amount of resin is therefore carefully predetermined.

In use, the moulding material 10 can be used to produce a moulded article (not shown). Moulding material 10 is located over the inside surface of a mould or tool (not shown). The inherent surface tack of the moulding material 10 provided by the resin areas 16a, b, c, d facilitates secure location of material within a mould, thus overcoming some of the difficulties of known sided prepregs.

Layers of material 10 are located one above the other. As will be discussed later the precise location of areas of relatively high and low resin content can be chosen according to the particular application.

The layered material 10 is then subjected to a conventional curing cycle, preferably using vacuum processing. The areas of relatively low resin content provide air ways for the removal of air during curing. The curing, which can be conducted at any suitable temperature within the scope of the present invention, causes the resinous material to flow and impregnate the areas of relatively low resin content, until the distribution of resinous material is substantially even across the areas.

As mentioned above an advantage of the present invention is that resinous material in the area(s) of relatively high resin content has little or no tendency to migrate laterally into the area(s) of relatively low resin content. This enables relatively low viscosity resinous material to be used and still provide relatively stable material 10. This consequently enables low temperature (in the order of cure temperatures between room temperature and 180°C although the cure temperature will depend upon the cure chemistry of the resinous material being used) curing resinous material to be used, providing for more efficient moulded article production.

The method of producing the moulded material 10 is also part of the present invention. One way that the moulding material can be prepared is to use printing techniques, such as screening printing or drum printing to essentially print the high content areas on the fibrous material. Further alternatives are to provide a robotic arrangement to apply the material for example by spraying, painting or otherwise depositing resinous material in a desired pattern.

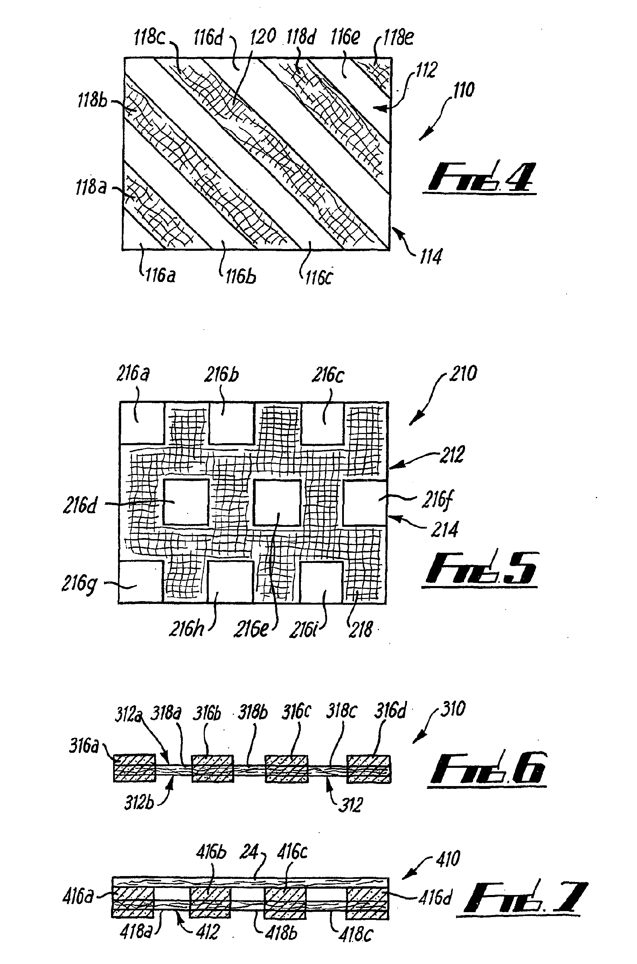

Fig. 4 shows a moulding material 110 according to a second embodiment of the present invention. The structure of the material 110 is essentially the same as the material 10 and similar components and features are referenced with similar reference numerals, prefixed with the numeral "1".

In this embodiment, the areas of relatively high resin content 116a, 116b, 116c, 116d and 116e extend generally diagonally over the fibrous material 112.

Fig. 5 shows a moulding material according to a third embodiment of the present invention, wherein the areas of relatively high resin content 216a, 216b, 216c, 216d, 216e, 216f, 216g, 216h, 216i are provided in a pattern of squares within a grid area of low resin content 218.

Fig. 6 shows a cross section, similar to the cross section of Fig. 3 of moulding material 310 according to a fourth embodiment of the present invention. In the material 310, the fibrous layer 312 comprises two sheets 312A, 312B of fibrous material which lie substantially adjacent to each other and through which areas of high resin content 316a, 316b, 316c and 316d extend.

The sheets 312a, 312b of fibrous material may be the same, or alternatively and preferably they may comprise different types of fibrous material for example one sheet may comprise carbon fibre, the other glass fibre. In a further alternative they may comprise the same or differing material placed in different orientations, such as mutually substantially perpendicularly.

Fig. 7 shows moulding material 410 according to a fifth embodiment of the present invention. The moulding material 410 is essentially the same as the moulding material 10, but comprises a layer of further material 24 conjoined to the surfaces of the pattern of high resin content area 416a, 416b, 416c and 416d. A layer of further material (not shown) may also be provided on the surfaces of the pattern on the other side of the material 410.

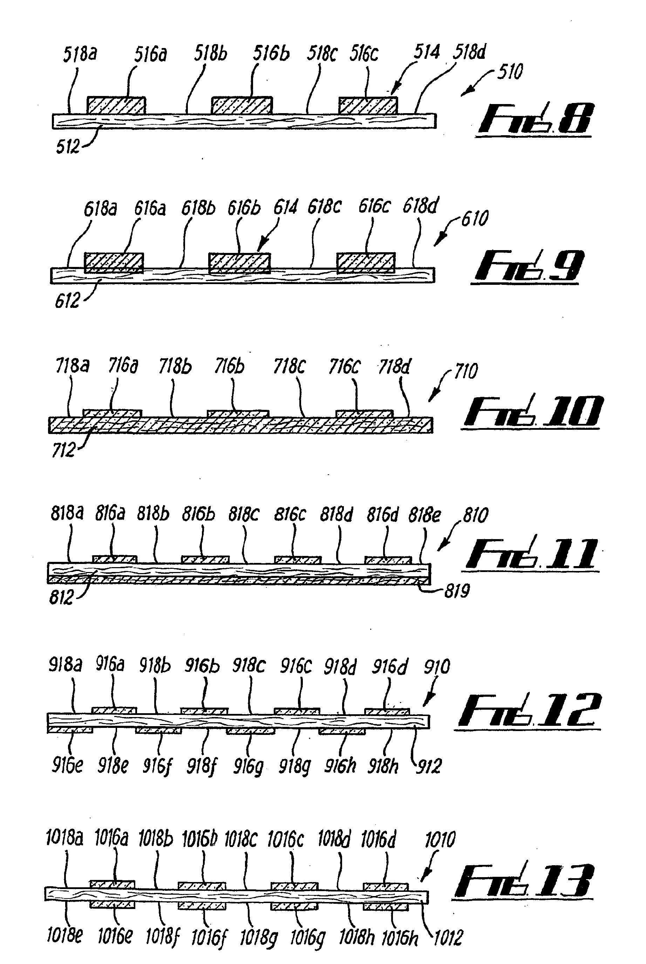

Fig. 8 shows a comparative moulding material 510. The material 510 comprises a layer of fibrous material 512 on the surface of one side of which is a plurality of relatively high resin content areas 516a, b, c. Areas of low resin content 518a, b, c, d which are generally devoid of resin are located around and between the areas 516a, b, c. In this particular embodiment the resin 514 in the areas 516a, b, c, shows little or no impregnation into the fibrous layer 512.

Fig. 9 shows an alternative comparative moulding material 610 which is similar to the material 510 of Fig. 8, other than the resin 614 of the areas of relatively high resin content are impregnated partially through the thickness of the fibrous layer 612.

Fig. 10 shows a comparative moulding material 710 in which the fibrous material 712 comprises a resin pre-impregnated fibrous material, or prepreg, on one side of which are areas of relatively high resin content 716a, b, c and areas of relatively low resin content 718a, b, c and d. It will be appreciated that areas of relatively high resin content can be provided on both sides of the fibrous material 712. Although air flow through the areas of relatively low resin content 718a, b, c, d is not as efficient in this embodiment due to the presence of resin in the fibrous layer 712, the spaces between the areas 716a, b, c facilitate air movement.

The comparative moulding material 810 shown in Fig. 11 comprises a fibrous material layer 812 on one side of which is a plurality of relatively high resin content areas 816a, b, c, d and a plurality of relatively low resin content areas 818a, b, c, d, e and on the other side thereof is a substantially continuous layer of resinous material 819.

The comparative moulding material 910 shown in Fig. 12 comprises a fibrous layer 912 on one side of the which is a first plurality of areas of relatively high resin content 916a, b, c, d and on the other side a second plurality of relatively high resin content areas 916 e, f, g, h all of said areas penetrating the fibrous layer a little or to no significant degree. The areas 916a, b, c, d are not in alignment with the areas 916e, f, g, h but are in alignment with the areas of relatively low resin content 918e, f, g, h and areas 916e, f, g, h are in alignment with the areas 918a, b, c, d.

The comparative moulding material 1010 of Fig. 13 is generally similar to the material 910 of Fig 12, but the areas of relatively high resin content 1016a, b, c, d on one side of the fibrous layer 1012 are generally in alignment with the relatively high resin content areas 1016e, f, g, h on the other side. Similarly the areas of relatively low resin content 1018a, b, c, d on side one side are generally in alignment with the areas of relatively low resin content 1018e, f, g, h on the other side.

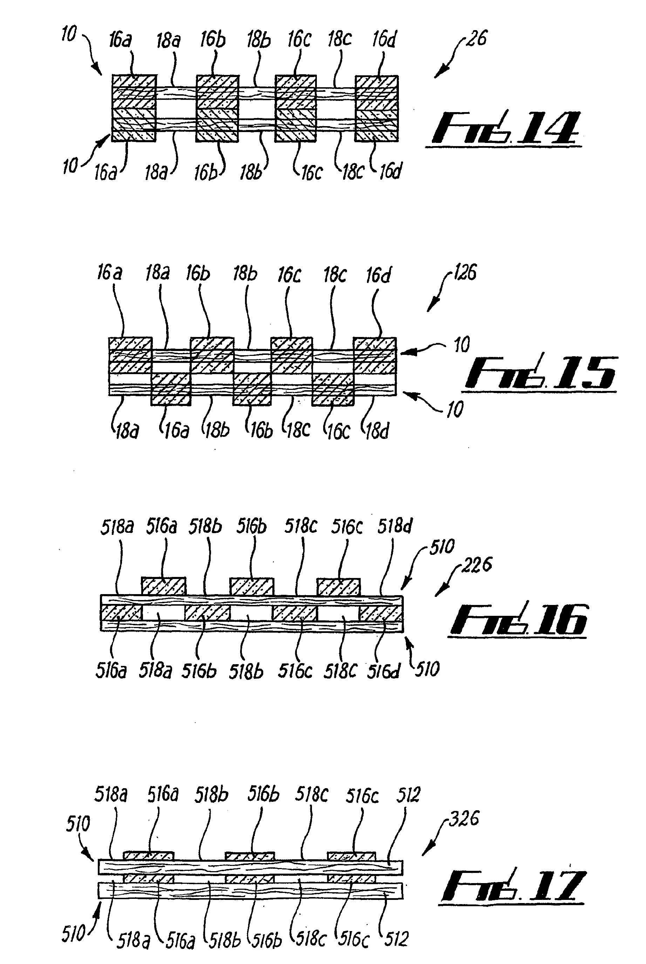

Fig. 14 shows a diagrammatic cross section of a moulding material laminate 26 according to the present invention. This comprises two (or more) layers of moulding material 10 located one above the other, with the high resin content areas in alignment one above each other. This laminate 26 can be produced outside the mould to provide further moulding material, or alternatively could be produced within a mould when producing a composite material. It will be appreciated that any of the embodiments of moulding material within the scope of this invention, in particular those exemplified herein can be layered in this way to produce laminated moulding material according to the invention.

Fig. 15 shows a further moulding material laminate 126 which is again constructed in similar fashion to the laminate of Fig. 14, but with the high resin content areas 16a, 16b, 16c and 16d out of alignment between adjacent layers. The laminate 126 is illustrated with the low resin content areas 18a, 18b, 18c with no overlap. However it is considered preferable to retain some overlap between relatively low resin content areas between adjacent layers to facilitate air removal during moulded article production.

Fig. 16 Is a cross section of a comparative laminate moulding material 226 having layers of moulding material 510 in which areas of relatively high resin content 516a, b, c are provided on only one side of the fibrous layer 512 (such as the material of Figs. 8, 9 and 10). The materials 510 are layered one on top of the other with the respective relatively high resin content 516a, b, c and 516a, b, c, d misaligned, with each other and generally aligned with the areas of relatively low resin content 518a, b, c, d and 518a, b, c respectively.

The laminate 326 of Fig. 17 is similar to that of Fig. 16, but with the areas of relatively high resin content 516a, b, c generally aligned between the layers of moulding material 510.

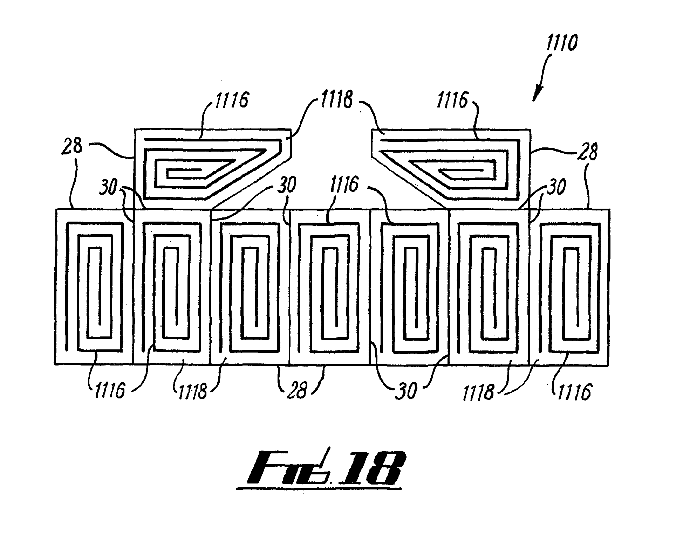

Fig. 18 shows moulding material 1110 according to a further embodiment of the present invention. The material 1110 comprises a plurality of regions 28 each of which comprises a region of relatively high resin content 1116 and an area 1118 of relatively low resin content. Fold lines 30 join the respective regions 28. The material 1110 is laid into a mould or tool in similar manner as described above. The fold lines 30 of the material 1110 are predetermined to coincide with curves and corners in the mould and thereby facilitate location of the material 1110 in a mould.

It will be appreciated that the number and configuration of regions is chosen according to the shape of the mould and/or moulded article in which the material 1110 is to be located or is to be formed.

It will be further appreciated that the fold lines may be pre-formed or partially pre-formed, or alternatively the regions may have no clear delineation between them.

The material 1110 may be layered on one or more such similar layers of material.

It will be appreciated that laminates can be produced by layering any number of the same or different combinations of moulding materials falling within the scope of this invention, either in partial, total or non-alignment, and the nature of alignment may vary between respective layers in multi-layer laminates.

Various modifications may be made without departing from the spirit or scope of the present invention.

The amount of resinous material in the relatively high resin content areas can be the same or alternatively may differ between some or all of the said areas. The latter may be desirable if fabrics, such as net shape fabrics, which have varying fabric weight across the material, are used.

The fibrous material may be a discontinuous material, such as chopped mat. Alternatively or in addition the material may be continuous within the layer, such as a woven material and/or unidirectional material.

It is particularly envisaged that the resinous material used would be a thermosetting material, although thermoplastic material could be used within the scope of the present invention.

The pattern of high resin content area(s) and low resin content area(s) may be directional, for example as shown in relation to the first embodiment, and the direction of the pattern and thereby the direction of movement of resin during curing over the areas of low resin content can be chosen according to any directional characteristic of the fibrous material, such as the direction of the warp and weft of a woven material, to give the material desired characteristics.

It will be appreciated that the pattern of relatively high and relatively low resin content areas does not require to be symmetrical, and lettering, numerals or wording or other desired symbols may be employed to produce the respective areas.

## Claims

1. Moulding material comprising a fibrous layer carrying a resinous material to have a pattern comprising bands, stripes or squares of relatively high resin content extending in spaced configuration across a side of the fibrous layer wherein the resin is wholly impregnated through the thickness of the fibrous layer such that corresponding bands, stripes or squares are provided on the underside surface of the fibrous layer, spaced by at least one other area of relatively low resin content that is devoid of resin defined on the side of the fibrous layer wherein one or more airways are provided by the area(s) of relatively low resin content on the side of the fibrous layer for the removal of air during curing of the material.

2. Moulding material according to claim 1, **characterised in that** the resinous material is arranged to move during curing or partial curing to provide a substantially even distribution of resinous material between the areas upon curing or partial curing.

3. Moulding material according to claim 2, **characterised in that** during curing resinous material from the said relatively high resin content area(s) moves over the relatively low resin content area(s).

4. Moulding material according to claim 3, **characterised in that** the resinous material is flowable during curing into the area(s) of relatively low resin content to impregnate the fibrous layer.

5. Moulding material according to any preceding claim, **characterised in that** the one or more of the area(s) of relatively high resin content at least partially impregnate the fibrous layer in the area of low resin content during cure.

6. Moulding material according to any preceding claim, **characterised in that** the amount of resin differs on the respective sides of the layer.

7. Moulding material according to any preceding claim, **characterised in that** the resinous surface area is substantially the same on the respective sides of the fibrous layer.

8. Moulding material according to any preceding claim, **characterised in that** one or more areas of relatively high resin content and of relatively low resin content is/are provided on each side of the fibrous layer, at least one of the area(s) on one of said sides being discrete from at least one of the areas on said other side.

9. Moulding material according to any preceding claim, **characterised in that** the amount of resinous material in each relatively high resin content area is substantially the same.

10. Moulding material according to any of claims 1 to 8, **characterised in that** the amount of resinous material differs between some or all of the said relatively high resin content areas.

11. Moulding material according to any of claims 1 or claim 10, **characterised in that** the pattern of areas of relatively high resin content is generally directional.

12. Moulding material according to claim 11, **characterised in that** the pattern extends in a predetermined direction relative to a direction characteristic of the fibrous layer.

13. Moulding material according to any of claims 1 to 12, **characterised in that** the pattern comprises various areas extending along both the warp and weft of a layer of woven fibrous material.

14. Moulding material according to any of claims 1 to 13, **characterised in that** the pattern defines one or more symbols such as letters, words, logos or the like.

15. Moulding material according to any of claims 1 to 14, **characterised in that** regions are provided on the moulding material and a pattern of areas of relatively high resin content provided in at least one of said regions.

16. Moulding material according to claim 15, **characterised In that** the pattern is the same in some or all of the regions.

17. Moulding material according to claim 15, **characterised in that** a different pattern is located in some or each region in which a pattern is provided.

18. Moulding material according to any of claims 15 to 17, **characterised in that** the regions are defined at least in part, by fold lines or locations at which the material is or is intended to be folded or bent particularly in a mould during use.

19. Moulding material according to any preceding claim, **characterised in that** the resinous material is sufficiently viscous to substantially remain in the desired area(s) for a predetermined time.

20. Moulding material according to claim 19, **characterised in that** the resinous material is sufficiently viscous to enable the moulding material to be generally stable for use for at least the outlife of the resinous material.

21. Moulding material according to claim 19 or claim 20, **characterised in that** the resinous material is curable at temperatures up to 120°C.

22. Moulding material according to any preceding claim, **characterised in that** the resinous material comprises a thermosetting material including any one or more of epoxy phenol novolaks, epoxy novolaks, epoxy cresol novolaks, bis phenol A epoxy resins, bis phenol F epoxy resins, multi functional resins, multi functional epoxy resin, phenolics, cyanate esters, BMI's, polyesters, thermoplastic materials.

23. Moulding material according to claim 22, **characterised in that** the resinous material contains up to 70% additives by weight.

24. Moulding material according to claim 23, **characterised in that** the resinous material comprises less than 40% additives by weight.

25. Moulding material according to any of claims 23 or 24, **characterised in that** the additives include one or more of thermoplastics, flame-retardants, fillers and curing agents, including combinations and blends thereof.

26. Moulding material according to any preceding claim, **characterised in that** the resinous material comprises a thermoplastic material.

27. Moulding material according to any preceding claim, **characterised in that** the fibrous layer comprises a single layer of fibrous material.

28. Moulding material according to any of claims 1 to 26, **characterised in that** the fibrous layer comprises a plurality of layers of material.

29. Moulding material according to any preceding claim, **characterised in that** the fibrous material is generally continuous within the layer, such as woven material.

30. Moulding material according to any preceding claim, **characterised in that** the fibrous material is generally discontinuous within the layer, such as chopped mat material.

31. Moulding material according to any of claims 28 to 30, **characterised in that** the layers comprise the same or alternatively different types of fibrous material.

32. Moulding material according to any preceding claim, **characterised in that** the fibrous material comprises one or more of glass fibre, carbon fibre, aramid, PE, PBO, boron natural fibres, stitched fabric, UD tape, non-woven material such as glass and/or polyester thermoplastic fibres or blends thereof.

33. Moulding material according to any preceding claim, **characterised in that** the moulding material comprises a further layer of material such as fibrous material, and/or resinous material conjoined to one or more of the area(s) of relatively high resin content to one side of the fibrous layer.

34. Moulding material according to claim 33, **characterised in that** said further layer is provided on both sides of the moulding material.

35. A moulding laminate comprising a plurality of layers of moulding material as defined in any of the preceding claims.

36. A moulding laminate according to claim 35, **characterised in that** the area(s) of relatively low resin content in adjacent layers are in alignment one above the other.

37. A moulding laminate according to claim 35, **characterised in that** some or all the area(s) of relatively low resin content in adjacent sheets are not in alignment one above the other.

38. A moulding laminate according to claim 37, **characterised in that** the area(s) at least partially overlap between adjacent sheets.

39. A method of producing a moulding material comprising providing a resinous material to have a pattern comprising bands, stripes or squares of relatively high resin content extending in spaced configuration across a side of a fibrous layer, wherein the resin is wholly impregnated through the thickness of the fibrous layer such that corresponding bands, stripes or squares are provided on the underside surface of the fibrous layer, and spaced by at least one area of relatively low resin content that is devoid of resin on the side of the layer of fibrous material wherein one or more airways are provided on the side of the fibrous layer by the area(s) of relatively low resin content for the removal of air during curing of the material.

40. A method according to claim 39, **characterised in that** the area(s) of relatively high resin content are printed, sprayed and/or painted on the fibrous material.

41. A method of moulding a composite material **characterised in that** the method comprises heating moulding material as defined in any of claims 1 to 34, to cause resinous material to move to be substantially evenly distributed between the areas.

42. A method according to claim 41, **characterised in that** the material is located in or against a mould or tool during moulding.

43. A method according to claim 42, **characterised in that** the material is located with area(s) of relatively high resin content located against the mould or tool to facilitate location thereof during curing.

44. A method according to any of claims 41 to 43, **characterised in that** the material is moulded in a substantial vacuum or otherwise low pressure conditions to facilitate removal of air via the area(s) of relatively low resin content.

45. A method according to any of claims 41 to 44, **characterised in that** the moulding material provided is a moulding laminate as defined in any of claims 35 to 38.

## Patentansprüche

1. Formmaterial, welches eines faserige Schicht aufweist, die ein harzartiges Material trägt, um ein Muster zu haben, welches Bänder, Streifen oder Quadrate relativ hohen Harzgehalts aufweist, die sich in beabstandeter Konfiguration über eine Seite der faserigen Schicht hinweg erstrecken, wobei das Harz vollständig durch die Dicke der faserigen Schicht hindurch imprägniert ist, so dass korrespondierende Bänder, Streifen oder Quadrate an der unterseitigen Oberfläche der faserigen Schicht bereitgestellt sind und um mindestens einen weiteren Bereich relativ geringen Harzgehalts beabstandet sind, der frei von Harz ist und an der Seite der faserigen Schicht definiert ist, wobei durch den Bereich oder die Bereiche relativ geringen Harzgehalts ein oder mehrere Luftwege an der Seite der faserigen Schicht zur Abfuhr von Luft während des Aushärtens des Materials bereitgestellt sind.

2. Formmaterial nach Anspruch 1, **dadurch gekennzeichnet, dass** das harzartige Material dazu derart angeordnet ist, dass es sich während des Aushärtens oder teilweisen Aushärtens bewegt, um nach dem Aushärten oder teilweisem Aushärten eine im wesentlichen gleichmässige Verteilung harzförmigen Materials zwischen den Bereichen zu erzeugen.

3. Formmaterial nach Anspruch 2, **dadurch gekennzeichnet, dass** während des Aushärtens harzartiges Material von dem Bereich oder den Bereichen relativ hohen Harzgehalts sich über den Bereich oder den Bereichen relativ geringen Harzgehalts bewegt.

4. Formmaterial nach Anspruch 3, **dadurch gekennzeichnet, dass** das harzartige Material während des Aushärtens in den Bereich oder die Bereiche relativ geringen Harzgehalts hinein fliessfähig ist, um die faserige Schicht zu imprägnieren.

5. Formmaterial nach einem der vorhergehenden Ansprüche, **dadurch gekennzeichnet, dass** der eine oder die mehreren Bereiche relativ hohen Harzgehalts während des Aushärtens die faserige Schicht in dem Bereich geringen Harzgehalts zumindest teilweise imprägnieren.

6. Formmaterial nach einem der vorhergehenden Ansprüche, **dadurch gekennzeichnet, dass** die Menge an Harz auf den jeweiligen Seiten der Schicht unterschiedlich ist.

7. Formmaterial nach einem der vorhergehenden Ansprüche, **dadurch gekennzeichnet, dass** die harzartige Oberfläche auf den jeweiligen Seiten der faserigen Schicht im wesentlichen gleich gross ist.

8. Formmaterial nach einem der vorhergehenden Ansprüche, **dadurch gekennzeichnet, dass** der eine oder die mehreren Bereiche relativ hohen Harzgehalts und relativ geringen Harzgehalts an jeder Seite der faserigen Schicht vorgesehen ist/sind, wobei mindestens einer der Bereiche an einer der Seiten von mindestens einem der Bereiche an der anderen Seite separat ist.

9. Formmaterial nach einem der vorhergehenden Ansprüche, **dadurch gekennzeichnet, dass** die Menge harzartigen Materials in jedem Bereich relativ hohen Harzgehalts im wesentlichen dieselbe ist.

10. Formmaterial nach einem der Ansprüche 1 bis 8, **dadurch gekennzeichnet, dass** die Menge harzartigen Materials zwischen einigen oder allen der Bereiche relativ hohen Harzgehalts unterschiedlich ist.

11. Formmaterial nach einem der Ansprüche 1 bis 10, **dadurch gekennzeichnet, dass** das Muster der Bereiche relativ hohen Harzgehalts im wesentlichen ausgerichtet ist.

12. Formmaterial nach Anspruch 11, **dadurch gekennzeichnet, dass** sich das Muster in einer vorbestimmten Richtung relativ zu einer Richtungs-Charakteristik der faserigen Schicht erstreckt.

13. Formmaterial nach einem der Ansprüche 1 bis 12, **dadurch gekennzeichnet, dass** das Muster verschiedene Bereiche aufweist, welche sich sowohl entlang der Kettfäden als auch entlang der Schussfäden einer Schicht aus gewebtem faserigen Material erstrecken.

14. Formmaterial nach einem der Ansprüche 1 bis 13, **dadurch gekennzeichnet, dass** das Muster ein oder mehrere Symbole wie Buchstaben, Wörter, Logos oder dgl. definiert.

15. Formmaterial nach einem der Ansprüche 1 bis 14, **dadurch gekennzeichnet, dass** Regionen an dem Formmaterial vorgesehen sind und ein Muster von Bereichen relativ hohen Harzgehalts in mindestens einer der Regionen vorgesehen ist.

16. Formmaterial nach Anspruch 15, **dadurch gekennzeichnet, dass** das Muster in einigen oder allen der Regionen dasselbe ist.

17. Formmaterial nach Anspruch 15, **dadurch gekennzeichnet, dass** ein unterschiedliches Muster in der einen oder anderen oder in jeder Region, in welcher ein Muster vorgesehen ist, angeordnet ist.

18. Formmaterial nach einem der Ansprüche 15 bis 17, **dadurch gekennzeichnet, dass** die Regionen zumindest teilweise durch Faltlinien oder Orte definiert sind, an denen das Material bei seiner Verwendung, insbesondere in einer Formvorrichtung, gefaltet oder gebogen ist oder dazu bestimmt ist, gefaltet oder gebogen zu werden.

19. Formmaterial nach einem der vorhergehenden Ansprüche, **dadurch gekennzeichnet, dass** das harzartige Material ausreichend zähflüssig ist, um in dem gewünschten Bereich oder den gewünschten Bereichen im wesentlichen für eine vorbestimmte Zeit zu verbleiben.

20. Formmaterial nach Anspruch 19, **dadurch gekennzeichnet, dass** das harzartige Material ausreichend zähflüssig ist, um zu ermöglichen, dass das Formmaterial zur Verwendung während mindestens der Outlife-Zeit des harzartigen Materials vorwiegend stabil ist.

21. Formmaterial nach Anspruch 19 oder 20, **dadurch gekennzeichnet, dass** das harzartige Material bei Temperaturen bis zu 120°C aushärtbar ist.

22. Formmaterial nach einem der vorhergehenden Ansprüche, **dadurch gekennzeichnet, dass** das harzartige Material ein wärmehärtendes Material aufweist, welches irgendeines oder mehrere der Materialien aus der folgenden Gruppe enthält: Epoxid-Phenol-Novolak, Epoxid-Novolak, Epoxid-Cresol-Novolak, Bisphenol-A-Epoxidharze, Bisphenol-F-Epoxidharze, multifunktionelle Harze, multifunktionelles Epoxidharz, Phenole, Cyanat-Ester, BMIs, Polyester, thermoplastische Materialien.

23. Formmaterial nach Anspruch 22, **dadurch gekennzeichnet, dass** das harzartige Material bis zu 70 Gew.% Additive enthält.

24. Formmaterial nach Anspruch 23, **dadurch gekennzeichnet, dass** das harzartige Material weniger als 40 Gew.% Additive aufweist.

25. Formmaterial nach Anspruch 22 oder 23, **dadurch gekennzeichnet, dass** die Additive ein oder mehrere Materialien aus der folgenden Gruppe enthalten: Thermoplaste, Flammschutzmittel, Füllstoffe und Aushärtmittel einschliesslich Kombinationen und Mischungen davon.

26. Formmaterial nach einem der vorhergehenden Ansprüche, **dadurch gekennzeichnet, dass** das harzartige Material ein thermoplastisches Material aufweist.

27. Formmaterial nach einem der vorhergehenden Ansprüche, **dadurch gekennzeichnet, dass** die faserige Schicht eine einzelne Schicht aus faserigem Material aufweist.

28. Formmaterial nach einem der Ansprüche 1 bis 26, **dadurch gekennzeichnet, dass** die faserige Schicht eine Vielzahl von Materialschichten aufweist.

29. Formmaterial nach einem der vorhergehenden Ansprüche, **dadurch gekennzeichnet, dass** das faserige Material innerhalb der Schicht vorwiegend kontinuierlich ist, wie z.B. gewebtes Material.

30. Formmaterial nach einem der vorhergehenden Ansprüche, **dadurch gekennzeichnet, dass** das faserige Material innerhalb der Schicht vorwiegend diskontinuierlich ist, wie z.B. kleingeschnittenes Mattenmaterial.

31. Formmaterial nach einem der Ansprüche 28 bis 30, **dadurch gekennzeichnet, dass** die Schichten dieselben oder abwechselnd unterschiedliche Arten von faserigem Material aufweisen.

32. Formmaterial nach einem der vorhergehenden Ansprüche, **dadurch gekennzeichnet, dass** das faserige Material ein oder mehrere Materialien aus der folgenden Gruppe aufweist: Glasfaser, Carbonfaser (Kohlenstoff-Faser), Aramid, PE, PBO, natürliche Borfasern, gesticktes Textil, UD-Bänder, nicht-gewebtes Material, wie z.B. Glas- und/oder thermoplastische Polyester-Fasern oder Mischungen davon.

33. Formmaterial nach einem der vorhergehenden Ansprüche, **dadurch gekennzeichnet, dass** das Formmaterial eine weitere Schicht Material aufweist, wie z.B. faseriges Material und/oder harzartiges Material, das mit einem oder mehreren der Bereiche relativ hohen Harzgehalts an einer Seite der faserigen Schicht verbunden ist.

34. Formmaterial nach Anspruch 33, **dadurch gekennzeichnet, dass** die weitere Schicht an beiden Seiten des Formmaterials vorgesehen ist.

35. Formlaminat, welches eine Vielzahl von Schichten aus Formmaterial gemäss einem der vorhergehenden Ansprüche aufweist.

36. Formlaminat nach Anspruch 35, **dadurch gekennzeichnet, dass** die Bereiche relativ geringen Harzgehalts in benachbarten Schichten übereinander ausgerichtet sind.

37. Formlaminat nach Anspruch 35, **dadurch gekennzeichnet, dass** einige oder alle der Bereiche relativ geringen Harzgehalts in benachbarten Lagen übereinander nicht ausgerichtet sind.

38. Formlaminat nach Anspruch 37, **dadurch gekennzeichnet, dass** der Bereich oder die Bereiche zwischen benachbarten Lagen zumindest teilweise überlappen.

39. Verfahren zum Herstellen eines Formmaterials, wobei ein harzartiges Material bereitgestellt wird, um ein Muster zu haben, welches Bänder, Streifen oder Quadrate relativ hohen Harzgehalts aufweist, die sich in beabstandeter Konfiguration über eine Seite der faserigen Schicht hinweg erstrecken, wobei das Harz vollständig durch die Dicke der faserigen Schicht hindurch imprägniert ist, so dass korrespondierende Bänder, Streifen oder Quadrate an der unterseitigen Oberfläche der faserigen Schicht bereitgestellt sind und um mindestens einen weiteren Bereich relativ geringen Harzgehalts beabstandet sind, der frei von Harz ist und an der Seite der faserigen Schicht ist, wobei durch den Bereich oder die Bereiche relativ geringen Harzgehalts ein oder mehrere Luftwege an der Seite der faserigen Schicht zur Abfuhr von Luft während des Aushärtens des Materials bereitgestellt sind.

40. Verfahren nach Anspruch 39, **dadurch gekennzeichnet, dass** der Bereich oder die Bereiche relativ hohen Harzgehalts auf das faserige Material gedruckt, gesprüht und/oder gemalt werden.

41. Verfahren zum Formen eines Verbundmaterials, **dadurch gekennzeichnet, dass** das Verfahren das Erwärmen von Formmaterial gemäss einem der Ansprüche 1 bis 34 aufweist, um ein Bewegen von harzartigem Material zu bewirken, damit es zwischen den Bereichen im wesentlichen gleichmässig verteilt wird.

42. Verfahren nach Anspruch 41, **dadurch gekennzeichnet, dass** das Material während des Formens in oder an einer Formvorrichtung oder einem Werkzeug angeordnet wird.

43. Verfahren nach Anspruch 42, **dadurch gekennzeichnet, dass** das Material so angeordnet wird, dass der Bereich oder die Bereiche relativ hohen Harzgehalts an der Formvorrichtung oder dem Werkzeug angeordnet sind, um seine Anordnung während des Aushärtens zu erleichtern.

44. Verfahren nach einem der Ansprüche 41 bis 43, **dadurch gekennzeichnet, dass** das Material in einem wesentlichen Vakuum oder anderweitigen Niederdruck-Bedingungen geformt wird, um durch den Bereich oder die Bereiche relativ geringen Harzgehalts die Abfuhr von Luft zu erleichtern.

45. Verfahren nach einem der Ansprüche 41 bis 44, **dadurch gekennzeichnet, dass** das bereitgestellte Formmaterial ein Formlaminat gemäss einem der Ansprüche 35 bis 38 ist.

## Revendications

1. Matériau de moulage comprenant une couche fibreuse comportant un matériau résineux pour avoir un motif comprenant des bandes, des rayures ou des carrés d'une teneur en résine relativement élevée s'étendant en configuration espacée à travers un côté de la couche fibreuse, dans lequel la résine est totalement imprégnée à travers l'épaisseur de la couche fibreuse de sorte que des bandes, des rayures ou des carrés correspondants soient disposés sur la surface inférieure de la couche fibreuse, espacée par au moins une autre zone de teneur en résine relativement faible qui est dépourvue de résine définie sur le côté de la couche fibreuse, dans lequel une ou plusieurs voies d'air sont fournies par la ou les zones de teneur en résine relativement faible sur le côté de la couche fibreuse pour l'élimination d'air pendant le durcissement du matériau.

2. Matériau de moulage selon la revendication 1, **caractérisé en ce que** le matériau résineux est agencé pour se déplacer pendant le durcissement ou le durcissement partiel pour fournir une répartition sensiblement uniforme de matériau résineux entre les zones lors du durcissement ou le durcissement partiel.

3. Matériau de moulage selon la revendication 2, **caractérisé en ce que** pendant le durcissement, le matériau résineux provenant de ladite ou desdites zones de teneur en résine relativement élevée se déplace sur la ou les zones de teneur en résine relativement faible.

4. Matériau de moulage selon la revendication 3, **caractérisé en ce que** le matériau résineux peut s'écouler pendant le durcissement dans la ou les zones de teneur en résine relativement faible pour imprégner la couche fibreuse.

5. Matériau de moulage selon l'une quelconque des revendications précédentes, **caractérisé en ce que** lesdites une ou plusieurs zones de teneur en résine relativement élevée imprègnent au moins partiellement la couche fibreuse dans la zone de faible teneur en résine pendant le durcissement.

6. Matériau de moulage selon l'une quelconque des revendications précédentes, **caractérisé en ce que** la quantité de résine diffère sur les côtés respectifs de la couche.

7. Matériau de moulage selon l'une quelconque des revendications précédentes, **caractérisé en ce que** la zone de surface résineuse est sensiblement la même sur les côtés respectifs de la couche fibreuse.

8. Matériau de moulage selon l'une quelconque des revendications précédentes, **caractérisé en ce qu'**une ou plusieurs zones de teneur en résine relativement élevée et de teneur en résine relativement faible est/sont disposée(s) sur chaque côté de la couche fibreuse, au moins l'une de la ou des zones sur l'un desdits côtés étant distincte d'au moins l'une des zones sur ledit autre côté.

9. Matériau de moulage selon l'une quelconque des revendications précédentes, **caractérisé en ce que** la quantité de matériau résineux dans chaque zone de teneur en résine relativement élevée est sensiblement la même.

10. Matériau de moulage selon l'une quelconque des revendications 1 à 8, **caractérisé en ce que** la quantité de matériau résineux diffère entre certaines ou entre toutes desdites zones de teneur en résine relativement élevée.

11. Matériau de moulage selon l'une quelconque parmi la revendication 1 ou de la revendication 10, **caractérisé en ce que** le motif de zones de teneur en résine relativement élevée est généralement directionnel.

12. Matériau de moulage selon la revendication 11, **caractérisé en ce que** le motif s'étend dans une direction prédéterminée par rapport à une direction caractéristique de la couche fibreuse.

13. Matériau de moulage selon l'une quelconque des revendications 1 à 12, **caractérisé en ce que** le motif comprend diverses zones s'étendant à la fois le long de la chaîne et de la trame d'une couche de matériau fibreux tissé.

14. Matériau de moulage selon l'une quelconque des revendications 1 à 13, **caractérisé en ce que** le motif définit un ou plusieurs symboles tels que des lettres, des mots, des logos ou similaires.

15. Matériau de moulage selon l'une quelconque des revendications 1 à 14, **caractérisé en ce que** des régions sont disposées sur le matériau de moulage et **en ce qu'**un motif de zones de teneur en résine relativement élevée est disposé dans au moins l'une desdites régions.

16. Matériau de moulage selon la revendication 15, **caractérisé en ce que** le motif est le même dans certaines ou dans toutes les régions.

17. Matériau de moulage selon la revendication 15, **caractérisé en ce qu'**un motif différent est positionné dans certaines régions ou dans chaque région dans laquelle un motif est disposé.

18. Matériau de moulage selon l'une quelconque des revendications 15 à 17, **caractérisé en ce que** les régions sont définies au moins en partie, par des lignes de pliage ou des emplacements au niveau desquels le matériau est plié ou est censé être plié ou courbé particulièrement dans un moule pendant l'utilisation.

19. Matériau de moulage selon l'une quelconque des revendications précédentes, **caractérisé en ce que** le matériau résineux est suffisamment visqueux pour rester sensiblement dans la ou les zones souhaitées pendant un temps prédéterminé.

20. Matériau de moulage selon la revendication 19, **caractérisé en ce que** le matériau résineux est suffisamment visqueux pour permettre au matériau de moulage d'être généralement stable en utilisation pendant au moins la durée de vie du matériau résineux.

21. Matériau de moulage selon la revendication 19 ou la revendication 20, **caractérisé en ce que** le matériau résineux est durcissable à des températures allant jusqu'à 120 °C.

22. Matériau de moulage selon l'une quelconque des revendications précédentes, **caractérisé en ce que** le matériau résineux comprend un matériau thermodurcissable incluant l'un quelconque ou plusieurs des éléments parmi les novalaques époxy phénol, les novalaques époxy, les novalaques époxy crésol, les résines époxy au bis phénol A, les résines époxy au bis phénol F, les résines multifonctionnelles, les résines époxy multifonctionnelles, les phénoliques, les esters de cyanate, les BMI, les polyesters, les matériaux thermoplastiques.

23. Matériau de moulage selon la revendication 22, **caractérisé en ce que** le matériau résineux contient jusqu'à 70 % d'additifs en poids.

24. Matériau de moulage selon la revendication 23, **caractérisé en ce que** le matériau résineux comprend moins de 40 % d'additifs en poids.

25. Matériau de moulage selon l'une quelconque des revendications 23 ou 24, **caractérisé en ce que** les additifs incluent un ou plusieurs éléments parmi les thermoplastiques, les ignifugeants, les charges et agents de durcissement, incluant des combinaisons et des mélanges de ceux-ci.

26. Matériau de moulage selon l'une quelconque des revendications précédentes, **caractérisé en ce que** le matériau résineux comprend un matériau thermoplastique.

27. Matériau de moulage selon l'une quelconque des revendications précédentes, **caractérisé en ce que** la couche fibreuse comprend une seule couche de matériau fibreux.

28. Matériau de moulage selon l'une quelconque des revendications 1 à 26, **caractérisé en ce que** la couche fibreuse comprend une pluralité de couches de matériau.

29. Matériau de moulage selon l'une quelconque des revendications précédentes, **caractérisé en ce que** le matériau fibreux est généralement continu au sein de la couche, comme un matériau tissé.

30. Matériau de moulage selon l'une quelconque des revendications précédentes, **caractérisé en ce que** le matériau fibreux est généralement discontinu au sein de la couche, comme un matériau de mat coupé.

31. Matériau de moulage selon l'une quelconque des revendications 28 à 30, **caractérisé en ce que** les couches comprennent les mêmes types ou en variante des types différents de matériau fibreux.

32. Matériau de moulage selon l'une quelconque des revendications précédentes, **caractérisé en ce que** le matériau fibreux comprend un ou plusieurs éléments parmi la fibre de verre, la fibre de carbone, l'aramide, le PE, le PBO, des fibres naturelles de bore, une étoffe piquée, une bande UD, un matériau non tissé tel que des fibres thermoplastiques de polyester et/ou de verre ou des mélanges de ceux-ci.

33. Matériau de moulage selon l'une quelconque des revendications précédentes, **caractérisé en ce que** le matériau de moulage comprend une couche supplémentaire de matériau tel qu'un matériau fibreux et/ou un matériau résineux fusionné à une ou plusieurs de la ou des zones de teneur en résine relativement élevée sur un côté de la couche fibreuse.

34. Matériau de moulage selon la revendication 33, **caractérisé en ce que** ladite couche supplémentaire est disposée sur les deux côtés du matériau de moulage.

35. Stratifié de moulage comprenant une pluralité de couches de matériau de moulage tel que défini dans l'une quelconque des revendications précédentes.

36. Stratifié de moulage selon la revendication 35, **caractérisé en ce que** la ou les zones de teneur en résine relativement faible dans des couches adjacentes sont en alignement l'une par dessus l'autre.

37. Stratifié de moulage selon la revendication 35, **caractérisé en ce qu'**une partie ou l'ensemble de la ou des zones de teneur en résine relativement faible dans des feuilles adjacentes ne sont pas en alignement l'une par dessus l'autre.

38. Stratifié de moulage selon la revendication 37, **caractérisé en ce que** la ou les zones se chevauchent au moins partiellement entre des feuilles adjacentes.

39. Procédé de production d'un matériau de moulage comprenant la fourniture d'un matériau résineux pour avoir un motif comprenant des bandes, des rayures ou des carrés de teneur en résine relativement élevée s'étendant en configuration espacée à travers un côté d'une couche fibreuse, dans lequel la résine est totalement imprégnée à travers l'épaisseur de la couche fibreuse de sorte que des bandes, des rayures ou des carrés correspondants sont disposés sur la surface inférieure de la couche fibreuse, et espacée par au moins une zone de teneur en résine relativement faible qui est dépourvue de résine sur le côté de la couche de matériau fibreux dans lequel une ou plusieurs voies d'air sont fournies sur le côté de la couche fibreuse par la ou les zones de teneur en résine relativement faible pour l'élimination d'air pendant le durcissement du matériau.

40. Procédé selon la revendication 39, **caractérisé en ce que** la ou les zones de teneur en résine relativement élevée sont imprimées, pulvérisées et/ou peintes sur le matériau fibreux.

41. Procédé de moulage d'un matériau composite **caractérisé en ce que** le procédé comprend le chauffage du matériau de moulage tel que défini dans l'une quelconque des revendications 1 à 34, pour amener le matériau résineux à se déplacer pour être réparti sensiblement uniformément entre les zones.

42. Procédé selon la revendication 41, **caractérisé en ce que** le matériau est positionné dans ou contre un moule ou un outil pendant le moulage.

43. Procédé selon la revendication 42, **caractérisé en ce que** le matériau est positionné avec une ou des zones de teneur en résine relativement élevée positionnées contre le moule ou l'outil pour faciliter son positionnement pendant le durcissement.

44. Procédé selon l'une quelconque des revendications 41 à 43, **caractérisé en ce que** le matériau est moulé dans des conditions de vide important ou sinon de basse pression pour faciliter l'élimination d'air via la ou les zones de teneur en résine relativement faible.

45. Procédé selon l'une quelconque des revendications 41 à 44, **caractérisé en ce que** le matériau de moulage fourni est un stratifié de moulage tel que défini dans l'une quelconque des revendications 35 à 38.
